# EUROPEAN PATENT APPLICATION

(11) **EP 3 521 484 A1**
(43) Date of publication of application: **07.08.2019**
(21) Application number: 19160550.0
(22) Date of filing: 21.03.2014
(51) Int. Cl.: C23C 22/48, C23C 22/68

(54) **STAGED FOOD PRODUCTS FOR INFANTS AND CHILDREN**

(30) Priority: 21.03.2013 WO PCT/NL2013/050207
(62) Divisional of application: 14715708.5
(71) Applicant: N.V. Nutricia, 2712 HM Zoetermeer (NL)
(72) Inventor: Lentfert, Marieke Gerharda Magdalena, 3584 CT Utrecht (NL); Weenen, Hugo, 3584 CT Utrecht (NL); Vereijken, Carolus Maria Johannes Leonardus, 3584 CT Utrecht (NL); Mazany, Agnieszka, 50-375 Wroclaw (PL); Vader, Mieke, 3584 CT Utrecht (NL); Guillet, Gaëlle, 3584 CT Utrecht (NL)
(74) Representative: Nederlandsch Octrooibureau

(57) **Abstract**

The present invention relates to a food range for infants and children that optimizes food learning and food appreciation, and in particular learning to recognize, accept and like vegetables and fruits. The invention pertains to a product presentation or product range comprising at least 6 nutritional compositions, suitable for weaning infants, said product presentation or range comprising stage I weaning compositions (1)(a), (1)(b) and (1)(c) intended for weaning infants at the start of weaning (up to about 2 months after the start of weaning), wherein said compositions comprise a food ingredient (a), (b) and (c), respectively; stage II weaning compositions (2)(a), (2)(b) and (2)(c) intended for weaning infants subsequent to the initial two-month or stage I weaning period, wherein said compositions comprise said food ingredient (a), (b) and (c), respectively, and optionally: stage III weaning compositions (3)(a), (3)(b) and (3)(c) intended for weaning infants subsequent to the stage II weaning period, wherein said compositions comprise said food ingredients (a), (b) and (c), respectively, wherein said food ingredients (a), (b) and (c) in each of the corresponding stage I and II (and optionally stage III) nutritional compositions are present in a recognizable form.

## Description

### Field of invention

The present invention relates to a food range for infants and children that optimizes food learning and food appreciation, and in particular learning to recognize, accept and like vegetables and fruits, particularly vegetables. In one aspect, the invention relates to developing oral motor and sensory skills in infants.

### Background of the invention

The first two years of life are a key period for food learning, and it is where infants and children develop their knowledge, expectations and preferences for different foods and ingredients. What they learn in these first two years will form the basis for their food habits in later life.

Weaning formulas are commercially available and labeled according to their suitability for the various weaning stages. Weaning kits are disclosed in WO 2008/145375, WO 2009/030485, WO 2007/091886 and WO 2012/078032. The prior art teaches methods of exposing infants and/or toddlers early in life, i.e. in the pre-weaning and weaning period, to a variety of different tastes and/or flavours. WO 2009/030487 and WO 2009/030488 focus on minimizing the content of undesirable ingredients in such weaning formulas.

However, there remains a need for further improving food learning and sensoric imprinting in infants. Food learning starts very early, especially the first two years of life seem important for the development of healthy eating habits, as the willingness to try new foods is especially good until the age of about two years and then declines to lower levels at the age of four (Cashdan, 1994). Once food habits are established they tend to be stable. Various studies (Nicklas et al., 1991; Skinner et al., 2002; Nicklaus et al., 2004; Madruga et al. 2012) have shown that food preferences which are developed at an early age have a long-lasting influence. The first two years should therefore be seen as a window of opportunity for development of healthy eating habits.

Around 18 months, food rejection starts to develop, and by around 20 months up to 50% of infants are reported to have refused a food in the previous week. Food rejection can lead to reduced dietary variety and a more unhealthy diet in general (Cooke et al., 2006; Falciglia et al., 2000; Russell & Worsley, 2008). It is therefore considered important to minimise the development of food rejection behaviours. Healthy food preferences should therefore already be established by the age of 18 months and care should be taken to maintain healthy food preferences in the period after 18 months. This also means that the development of healthy food preferences should start well before 18 months, preferably from the start of weaning, or before.

Once weaning has started, children begin to learn about foods. They learn about appropriate foods, habits and cultural norms. This learning process leads to the development of food schemas (Pliner, 2008). The schemas that develop during this early period may be quite resistant to change. Thus, developing schemas which lead to positive expectations of food ingredients (*e.g*., vegetables and fruit) are important. It is an object of the present invention to achieve this goal, and/or to provide the public with a useful choice.

### Summary of the invention

To achieve these goals, the inventors have provided a food range for various weaning stages (for different ages during the weaning period), where a different recipe is used in each stage, and where the texture and/or complexity of an ingredient in the recipe increases with the stage (*e.g*., intended age), but where the ingredient is repeatedly recognizable in each of the stages. The food ingredient thus returns in each of the weaning stages, thus familiarising the infant with the food ingredient, imprinting the infant with the sensory characteristics of the food ingredient and teaching the infant to like this food ingredient. Also, consumption of recognizable food ingredients throughout these different weaning stages will help the infant to appreciate new food ingredients later in life.

One of the inventors' insights is to make target food ingredients re-appear (in different combinations with other food ingredients) throughout the infant's development (in various weaning stages), thus training the infant through repetition and recognition.

Without wishing to be bound to any theory, the inventors believe that providing the same ingredient in a recognizable form administered to the infant repeatedly throughout the weaning period (*e.g.,* in different stages) can help infants and children develop positive schemas for the ingredient. The ingredient may be provided alone or in combination with other ingredients (*e.g*., as meals), and the combinations of the ingredient with other ingredients may be the same combination over different stages or may be different combinations over different stages, provided the ingredient is in a recognizable form in each stage. The food ingredient preferably returns in all of weaning stages I, II and preferaby also in weaning stage III such that it originates from a plant product, preferably a vegetable plant product, in a recognizable form based on an assessment of the colour, smell and taste and flavour of the food ingredient, by a representative sample of adult consumers familiar with these food ingredients. In accordance with definitions given to recognizability in the art, it is the ability of the consumer/assessor to know and remember a food ingredient because of previous knowledge or experience of said food ingredient. It is preferred that the same food ingredient is appreciated as originating from a specific vegetable plant by such a panel of adult consumers throughout the different stages in terms of all but texture of said food ingredient. In the experimental part report is made of such a recognition test, with results collected from three different subgroups with a statistically relevant overall number of untrained adult consumers. The results obtained for each subtest corresponded to one another, and with the overall assessment, underscoring the suitability of such a test for establishing recognizability objectively.

It is not part of the invention that the untrained assessor or adult consumer differentiates food ingredient (a) through the different stages (1), (2) and (3); in fact it is preferred that the untrained assessor will experience food ingredient (a) as the same in terms of colour, taste and flavour, smell throughout these stages. The same accounts for food ingredients (b) and (c). Inherent to the term 'recognizable form', the untrained assessor can differentiate between food ingredients (a), (b) and (c).

Accordingly, the present invention provides a product presentation or product range comprising at least 6, preferably at least 9, nutritional compositions, suitable for weaning infants, said product presentation or range comprising:
- nutritional compositions (1)(a), (1)(b) and (1)(c) intended for weaning infants at the start of weaning (up to about 2 months after the start of weaning), such period referred to as 'stage I weaning period', wherein said compositions comprise a food ingredient (a), (b) and (c), respectively,
- nutritional compositions (2)(a), (2)(b) and (2)(c) intended for weaning infants subsequent to the initial two-month or stage I weaning period, such period referred to as the 'stage II weaning period', wherein said compositions comprise said food ingredient (a), (b) and (c), respectively, and optionally:
- nutritional compositions (3)(a), (3)(b) and (3)(c) intended for weaning infants subsequent to the stage II weaning period, such period referred to as the 'stage III weaning period', wherein said compositions comprise said food ingredients (a), (b) and (c), respectively,
wherein said food ingredients (a), (b) and (c) in each of the corresponding stage I and II (and optionally stage III) nutritional compositions are present in a recognizable form, i.e. food ingredient (a) in (1)(a), (2)(a) [and optionally (3)(a)], food ingredient (b) in (1)(b), (2)(b) [and optionally (3)(b)], and food ingredient (c) in (1)(c), (2)(c) [and optionally (3)(c)] are present in recognizable form in each of the individual compositions.

Worded differently, the present invention provides a product presentation or product range comprising at least 6, preferably at least 9, weaning compositions for weaning infants, comprising at least three stage I weaning compositions (1)(a), (1)(b) and (1)(c) comprising food ingredients (a), (b) and (c), respectively; at least three stage II weaning compositions (2)(a), (2)(b) and (2)(c) comprising said food ingredients (a), (b) and (c), respectively; and optionally stage III weaning compositions (3)(a), (3)(b) and (3)(c) comprising said food ingredients (a), (b) and (c), respectively; and wherein each of said weaning compositions provides said food ingredients (a), (b) and (c) in a recognizable form.

It is preferred that said food ingredients (a), (b) and (c) are derived from a single vegetable plant and are present in each of the corresponding stage I and II (and optionally stage III) nutritional compositions, and said food ingredients (a), (b) and (c) are present in a recognizable form, preferably recognizable such that a representative sample of adult consumers who are familiar with said food ingredients (a), (b) and (c) recognize the food ingredient as originating from the vegetable plant based on the combination of colour, smell and taste and flavour. Taste and flavour are typically the perception of a food or drink by chemoreception in the nose and mouth when the product is in the mouth.

The compositions are preferably presented together on a store shelf or article display tray, preferably all within the buyer's visible reach. Hence, the 'product presentation' is preferably an article display tray or store shelf comprising (i.e. displaying) said nutritional compositions, preferably on a single rack or on adjacent racks next or on top of one another.

In one aspect, the invention pertains to the use of food ingredients (a), (b) and (c) in the manufacture of a product range or presentation as defined above for providing nutrition to a weaning infant and/or improving healthy food learning and appreciation and/or developing oral motor and sensory skills in infants, involving administering: stage I nutritional compositions (1)(a), (1)(b) and (1)(c) to weaning infants for a two-month period from the start of weaning, the infant preferably between 4 and 6 months of age at the start of weaning; stage II nutritional compositions (2)(a), (2)(b) and (2)(c) to weaning infants for a two-month period subsequent to the stage I weaning period; and optionally stage III nutritional compositions (3)(a), (3)(b) and (3)(c) to weaning infants for a four-month period subsequent to the stage II weaning period.

In another aspect, the present invention also provides a method for providing nutrition to a weaning infant and/or improving healthy food learning and appreciation of a weaning infant, comprising feeding to the infant a product range according to the present invention, preferably comprising feeding to the infant nutritional compositions (1)(a), (1)(b) and (1)(c) and (2)(a), (2)(b) and (2)(c) and optionally (3)(a), (3)(b) and (3)(c) as defined throughout the specification and claims.

With the term 'food ingredient' which returns in each of the weaning stages of the kit and the use according to the invention it is preferably understood material derived from a single fruit or vegetable plant, preferably material derived from a vegetable plant.

In a preferred embodiment, texture and consistency of the food ingredient progresses (i.e. increases) through the consecutive weaning stages. It helps developing oral motor and sensory skills, including increasing the mobility and coordination of tongue and lips, sensing and recognizing different textures, biting, chewing, etc.

### List of the preferred embodiments

The invention particularly pertains to:
1. A product presentation or product range comprising at least 6 nutritional compositions, suitable for weaning infants, said product presentation or range comprising:
   - nutritional compositions (1)(a), (1)(b) and (1)(c) intended for weaning infants at the start of weaning (up to about 2 months after the start of weaning), such period referred to as 'stage I weaning period', wherein said compositions comprise a food ingredient (a), (b) and (c), respectively,
   - nutritional compositions (2)(a), (2)(b) and (2)(c) intended for weaning infants subsequent to the initial two-month or stage I weaning period, such period referred to as the 'stage II weaning period', wherein said compositions comprise said food ingredient (a), (b) and (c), respectively, and optionally:
   - nutritional compositions (3)(a), (3)(b) and (3)(c) intended for weaning infants subsequent to the stage II weaning period, such period referred to as the 'stage III weaning period', wherein said compositions comprise said food ingredients (a), (b) and (c), respectively,
   wherein said food ingredients (a), (b) and (c) in each of the corresponding stage I and II (and optionally stage III) nutritional compositions are present in a recognizable form. It is preferred that said food ingredients (a), (b) and (c) are derived from a single vegetable plant and are present in each of the corresponding stage I and II (and optionally stage III) nutritional compositions, and said food ingredients (a), (b) and (c) are present in a recognizable form, preferably recognizable such that a representative sample of adult consumers who are familiar with said food ingredients (a), (b) and (c) recognize the food ingredient as originating from the vegetable plant based on the combination of colour, smell and taste and flavour.
2. The product presentation or product range according to embodiment 1, being an article display tray or store shelf comprising said nutritional compositions.
3. The product presentation or product range according to embodiment 1 or 2, wherein said food ingredient is derived from a single vegetable plant selected from the group consisting of pea, corn, cabbage, courgette, carrot, spinach, endive, leek, red beet, brown bean, butter bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom.
4. The product presentation or product range according to embodiment 3, wherein said food ingredient is derived from a single vegetable plant selected from the group consisting of cabbage, spinach, endive, leek, red beet, green bean, broccoli, sprout, chicory, bamboo, asparagus, artichoke, turnip, celery, parsnip, cucumber, lettuce, rhubarb, pepper and mushroom.
5. The product presentation or product range according to any one the preceding embodiments, wherein said nutritional compositions are provided with means for identifying and/or associating the nutritional compositions comprising the same food ingredient in recognizable form through all weaning stages.
6. The product presentation or product range according to embodiment 5, wherein the identification or association is achieved by providing the containers comprising said nutritional compositions with indicia (e.g. words, symbols, colors, logo and/or number).
7. The product presentation or product range according to any one of the preceding embodiments, wherein recognizability is assessed in a study with untrained assessors who are familiar with the vegetable, assessing the nutritional composition in terms of expected appearance recognisability of the smell and taste/flavour sensations and overall recognizability on a score of 1 - 5, 5 being the highest, and wherein a food ingredient is present in recognizable form if the overall score is higher than 3, preferably higher than 4.
8. The product presentation or product range according to any one of the preceding embodiments, wherein the nutritional compositions (1)(a), (1)(b) and (1)(c) are in puree form, and the nutritional compositions (2)(a), (2)(b) and (2)(c) are in mashed form.
9. The product presentation or product range according to embodiment 8, wherein the nutritional compositions (1)(a), (1)(b) and (1)(c) are homogeneous mixtures, and 30 - 55 wt% of the food ingredient present in the nutritional compositions (2)(a), (2)(b) and (2)(c) is in the form of pieces with a size of 3 - 8 mm; optionally, 55 - 75 wt% of the food ingredient present in the nutritional compositions (3)(a), (3)(b) and (3)(c) is in the form of pieces with a size between 10 - 15 mm.
10. The product presentation or product range according to any one of the preceding embodiments, wherein the nutritional compositions (1)(a), (1)(b) and (1)(c) each have a different colour, and the nutritional compositions (2)(a), (2)(b) and (2)(c) have the same colour as the nutritional compositions (1)(a), (1)(b) and (1)(c), respectively, and optionally the nutritional compositions (3)(a), (3)(b) and (3)(c) have the same colour as the nutritional compositions (1)(a), (1)(b) and (1)(c), respectively.
11. The product presentation or product range according to any one of the preceding embodiments, wherein said food ingredients (a), (b) and (c) are present in amounts of at least 15 %, more preferably at least 20 % of the weight of the nutritional compositions.
12. The product presentation or product range according to embodiment 11, wherein the food ingredient in each of nutritional compositions (1)(a), (1)(b) and (1)(c) is present in amount of at least 35 wt% of the composition, preferably at least 40 wt% of the composition, most preferably at least 50 wt% of the composition.
13. The product presentation or product range according to embodiment 11 or 12, wherein there is no second food ingredient selected from the group consisting of meat, fish, poultry, egg, cheese or material derived from vegetable or fruit plant selected from the group consisting of pea, corn, cabbage, courgette, carrot, spinach, endive, leek, red beet, butter bean, brown bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom; strawberry, banana, blueberry, apricot, pineapple, apple, orange, tangerine, mandarin, cherry, peach, grapefruit, melon, plum, pear, ros-hip, kiwi, red berry, grape, lemon, papaya, raspberry, avocado, cranberry, lychee, lime and nectarine present in each of nutritional compositions (1)(a), (1)(b) and (1)(c).
14. The product presentation or product range according to any one the preceding embodiments, wherein the number of food ingredients (including the food ingredient in recognizable form) selected from the group consisting of meat, fish, poultry, egg, cheese, and material derived from vegetable or fruit plant selected from the group consisting of pea, corn, cabbage, courgette, carrot, spinach, endive, leek, red beet, butter bean, brown bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom; strawberry, banana, blueberry, apricot, pineapple, apple, orange, tangerine, mandarin, cherry, peach, grapefruit, melon, plum, pear, ros-hip, kiwi, red berry, grape, lemon, papaya, raspberry, avocado, cranberry, lychee, lime and nectarine, in each of nutritional compositions (2)(a), (2)(b) and (2)(c) and optionally each of nutritional compositions (3)(a), (3)(b) and (3)(c) is 2, 3 or 4, preferably 2 or 3.
15. The product presentation or product range according to any one the preceding embodiments, for use in stimulating the food appreciation, food acceptance or food learning of the infant, for increasing familiarization with multiple tastes and flavours, and/or for reducing the risk of developing food neophobia, food refusal and/or other eating difficulties, and/or for reducing the occurrence of certain diseases related to unbalanced intake of food later in life and/or for developing oral motor and sensory skills in infants.
16. Use of food ingredients (a), (b) and (c) in the manufacture of a product range or presentation as defined in any of the preceding embodiments for providing nutrition to a weaning infant and/or improving healthy food learning and appreciation and/or for developing oral motor and sensory skills in infants, involving administering: said stage I nutritional compositions (1)(a), (1)(b) and (1)(c) to weaning infants for a two-month period from the start of weaning, the infant preferably between 4 and 6 months of age at the start of weaning; said stage II nutritional compositions (2)(a), (2)(b) and (2)(c) to weaning infants for a two-month period subsequent to the stage I weaning period; and optionally said stage III nutritional compositions (3)(a), (3)(b) and (3)(c) to weaning infants for a four-month period subsequent to the stage IV weaning period.
17. A method for providing nutrition to a weaning infant and/or improving healthy food learning and appreciation and/or for developing oral motor and sensory skills of a weaning infant, comprising feeding to the infant nutritional compositions (1)(a), (1)(b) and (1)(c) and (2)(a), (2)(b) and (2)(c) and optionally (3)(a), (3)(b) and (3)(c).

### Detailed description of the invention

Weaning is the process of gradually introducing a mammal infant to what will be its adult diet and withdrawing the supply of its mother's milk. The invention is limited to human infants. For those, with regard to the definition of the start of weaning, World Health Organization presently recommends waiting until 6 months to introduce baby food, but there are indications that weaning should start between 4 and 6 months after birth. The applicant has no intention of altering or even interfering with WHO recommendations on breastfeeding which the applicant recognizes is the optimal form of nutrition in infancy. The range of compositions are designed to develop and maintain healthy food preferences by focussing on the recognizability of the food ingredient throughout the weaning period which is typically divided in at least consecutive stages I, II and III in the art. The WHO guidelines are leading for the start of weaning in the context of the invention.

The weaning period 'stages' terminology, particularly a distinction in consecutive stages I, II and III during the first year of life is accepted practice in the field. Stage I encompasses the first two months of the weaning period, stage II covers the subsequent two months of weaning, and stage III typically involves the next four months of weaning. In the context of the invention, nutritional compositions a), b) and c) may be likewise be referred to as 'stage I nutritional composition', 'stage II nutritional composition' and 'stage III nutritional composition', respectively. Consistency and texture increase going from stage I to stage III weaning compositions.

Embodiments in which nutritional compositions for different weaning stages are physically connected (as a kit of parts) are preferably excluded from the invention. Limited shelf life will render such embodiments unattractive to consumers.

The terms 'recognizable' and the like mean that the food ingredients which are individually recognized by the weaning infant upon consumption. Use can be made of a representative sample of (untrained) adults, preferably at least 30 adults, who are familiar with the ingredient and based on previous knowledge and experience can recognize the food ingredients. The infants are preferably between 4 and 18 months of age, more preferably between 6 and 12 months of age.

The food ingredients (a), (b), (c), (d) etc. are all different materials derived from a single fruit or vegetable plant. The 'food ingredient' is preferably (i) derived from a single vegetable plant selected from the group consisting of pea, corn, cabbage, courgette, carrot, spinach, endive, leek, red beet, butter bean, green bean, brown bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom; or (ii) derived from a single fruit plant selected from the group consisting of strawberry, banana, blueberry, apricot, pineapple, apple, orange, tangerine, mandarin, cherry, peach, grapefruit, melon, plum, pear, ros-hip, kiwi, red berry, grape, lemon, papaya, raspberry, avocado, cranberry, lychee, lime and nectarine.

In a preferred embodiment, the food ingredient is preferably a vegetable plant material from the above group, more preferably a vegetable plant material from the group consisting of cabbage, spinach, endive, leek, red beet, green bean, broccoli, sprout, chicory, bamboo, asparagus, artichoke, turnip, celery, parsnip, cucumber, lettuce, rhubarb, pepper and mushroom. In one embodiment, the food ingredient is preferably a vegetable plant material from the group consisting of parsnip, sweet potato, brown beans, green beans.

In some embodiments, the product presentation or range or method comprises the aforementioned stage I, stage II and stage III weaning compositions, and further comprises nutritional compositions (4)(a), (4)(b) and (4)(c) which are compositions intended for weaning infants subsequent to the stage III weaning period (typically for infants of about 12 months and older, preferably 12 - 18 months of age), such period referred to as 'stage IV weaning period', wherein said compositions comprise a food ingredient (a), (b) and (c), respectively. These food ingredients (a), (b) and (c) are present in recognizable form through all of the aforementioned weaning stages.

The product presentation or range or method preferably comprises stage I, stage II and optionally stage III and stage IV weaning compositions comprising food ingredients (a), (b), (c), (d) and (e) in recognizable form, all of said food ingredients being different from one another, and wherein each of said food ingredients is represented in each of the weaning stages I, II and optionally III and IV.

Optionally the product presentation or range or method comprises further nutritional compositions comprising food ingredient (f) and optionally further nutritional compositions comprising food ingredient (g) and optionally further nutritional compositions comprising food ingredient (h) and optionally further nutritional compositions comprising food ingredient (i) and optionally further nutritional compositions comprising food ingredient (j) and optionally nutritional compositions comprising further food ingredient (k), where for each nutritional compositions comprising a food ingredient (f, g, h, i, j, k) there is provided a stage I and stage II weaning composition, and optionally also a stage III weaning composition and preferably a stage III and stage IV weaning composition. Each of the food ingredients (f), (g), (h), (i), (j) and (k) are derived from single material of a vegetable plant, preferably each being derived from a different vegetable plant selected from the aforementioned list, i.e. all of the food ingredients (a) ... (k) different from one another in terms of recognizability. In fact for the purpose of this invention there is no limit to the maximum number of different food ingredients in the product presentation or range or method according to the invention. Conveniently, the product presentation or range or method involves at least 7 different compositions, for each day of the week.

The 'product presentation' or 'product range' comprises a plurality of containers each comprising one of the nutritional weaning compositions according to the invention. The product range or presentation or method preferably comprises 6 to 50 containers, more preferably 9 to 30 containers. The containers are preferably in the form of a bag, pouch, can, cup, jar, sachet or the like. Each container preferably comprises one portion of weaning composition. The containers typically have a capacity of between 50 and 250 g, preferably a capacity of 100 - 225 g. It is preferred that stage I weaning composition containers have a capacity of 50 - 130 g, stage II weaning composition containers have a capacity of 80 - 130 g, stage III weaning composition containers have a capacity of 100 - 200 g and/or stage IV weaning composition containers have a capacity of 150 - 250 g. The containers are preferably constructed so to ensure hygienic protection against contamination and spoilage, e.g. dust, dirt and bacteria. The containers are suitably made from plastic, paper and/or aluminium, preferably in the form of a cup, with a sealed lid, wherein said lid can preferably be peeled-off. The lids are preferably removable from each container individually, preferably by tearing. In one embodiment, the containers are pouches with a capacity between 30 and 250 g, preferably 40 - 225 g.

In one embodiment, the stage I, stage II and stage III weaning compositions provide an energy density of 0.7 - 1.3 kcal/ml, preferably 0.8 - 1.2 kcal/ml. There are limited recommendations on appropriate portion sizes for foods complementary to breastfeeding in the literature. WHO has given a recommendation on the amount of weaning foods in general that an infant normally consumes when the energy density of the food is 0.8-1.0 kcal/g, mentioning that complementary feeding should start with a few teaspoons, and gradually increase to about 200 ml at 12 months of age.

The weaning compositions may be in chilled, frozen, fresh and/or shelf-stable form. In one aspect, the weaning compositions are in ready-to-eat form. The ready-to-eat form can normally be administered directly to the infant, optionally after heating. The compositions may be stored frozen, cooled or be stable at ambient temperatures. Preferably the meals will be stable at ambient temperatures.

The containers comprising the weaning compositions are individually packaged, preferably packaged in single holder-packaging, enabling the compositions to be appreciated as single units. In one aspect, the packaging of the individual containers comprising the same recognizable food ingredient throughout the various weaning stages are designed such that the parent or buyer will associate these stage I, II (and optionally stage III and IV) weaning composition with the same recognizable food ingredient with one another, i.e. the parent or buyer will associate a stage I weaning composition with food ingredient (a) with a stage II (and optional stage III) weaning composition also comprising food ingredient (a) in recognizable form.. In one embodiment, the compositions comprised in the product presentation are provided with means for identifying and/or associating/linking the weaning compositions comprising the same food ingredient in recognizable form in all weaning stages, i.e. linking (1)(a), (2)(a) and optionally (3)(a); (1)(b), (2)(b) and optionally (3)(b); and (1)(c), (2)(c) and optionally (3)(c). The identification or association is preferably a mental step performed by the buyer. In order to ease the association or link between the stage I, stage II (and optionally further stages) weaning compositions comprising the same food ingredient in recognizable form, the containers comprising said weaning compositions may be provided with indicia (e.g. words, symbols, colors, logo and/or number). In one aspect, the containers comprising the same food ingredient in recognizable form contain the same coloured labels, lids or caps throughout the various weaning stages, and a (lid, label or cap) color which enables the buyer to distinguish from weaning compositions comprising a different food ingredient in recognizable form.

The containers are preferably labelled, expressing that the content of the container should be preferably consumed in a particular frequency on a weekly basis. Preferably the content of a container is consumed in one meal, particularly where it concerns stage II (and optional stage III and stage IV) weaning compositions.

In one aspect, the invention pertains to a kit of parts, i.e. a plurality of containers, which are enclosed in a single packaging (e.g. carton, box, net or foil) and/or (mutually) physically interconnected by means of connecting portions which are preferably breakable (e.g. breakable interconnectors), and wherein said kit of parts comprises at least 3, more preferably at least 4, more preferably at least 5, 6, 7, 8 of the aforementioned containers with weaning compositions comprising a different food ingredient in recognizable form, wherein said kit only provides weaning compositions for one particular weaning stage (e.g. stage I, stage II, stage III or stage IV). It is preferred that the kit comprises (1)(a), (1)(b) and (1)(c); or (2)(a), (2)(b) and (2)(c); or (3)(a), (3)(b) and (3)(c). The kit holder packaging preferably indicates the weaning stage. The compositions in the kit are preferably unified by that each of the individually packaged nutritional compositions contains labelling or indicia, said labelling or indicia making reference to the weaning stage, and comprising means for distinguishing and identifying the containers comprising different food ingredients in recognizable form from one another.

The product range or presentation, and the kit of parts are suitable for stimulating the food appreciation, food acceptance or food learning of the infant, for increasing familiarization with multiple tastes and flavours, and/or for reducing the risk of developing food neophobia, food refusal and/or other eating difficulties, and/or for reducing the occurrence of certain diseases related to unbalanced intake of food later in life and/or for developing oral motor and sensory skills in infants.

The present invention provides the same ingredient in a recognizable form repeatedly throughout the weaning period (*e.g.,* in different stages) either alone or in combination with other ingredients (*e.g*., as meals), and the combinations of the ingredient with other ingredients may be the same combination over different stages or may be different combinations over different stages, provided the ingredient is in a recognizable form in each stage. The phrase "recognizable form" (and the like) is used with reference to ingredients that are provided or prepared in such a way that the weaning infant who consumes the ingredient recognizes the ingredient, for instance in terms of colour, odour, texture, mouthfeel and/or overall appearance. For instance, the infant may recognize the ingredient as being the same as the ingredient it has previously ingested in a preceding weaning stage. It is believed that by providing the same ingredient in a recognizable form repeatedly throughout the weaning period (*e.g.,* in different stages) it can help infants and children develop positive schemas for the ingredient.

Recognizability may be achieved differently through the different stages. For an ingredient to be provided or prepared in a recognizable form, the inventors note that the following factors contribute to recognizability: appearance, taste and flavour, texture, mouth-feel, and smell. It is preferred that the food ingredient is at least recognizable in terms of taste and flavour and smell, more preferably at least recognizable in terms of taste and flavour, colour and smell.

In one embodiment, recognizability is assessed in a study with untrained assessors who are familiar with the vegetable, assessing the nutritional composition in terms of expected appearance, recognisability of the smell and taste sensations and overall or average recognizability on a score of 1 - 5, 5 being the highest, and wherein a food ingredient is present in recognizable form if the overall score is higher than 3 (3.0), preferably higher than 4 (4.0), preferably having an overall score of at least 5 (5.0).

Recognizability may additionally or alternatively be achieved as outlined here below:
In one aspect, the composition comprising said food ingredient has a colour that is typical for said food ingredient and as such recognizable to the eye, and/or the taste/flavour of the food ingredient in the composition is the predominant taste/flavour according to a sensory profiling test such as described here above. To optimize food learning, these vegetables preferably have different and distinct colours, to help the child to associate a taste/flavour with the appearance of the product. In one embodiment, the nutritional compositions (1)(a), (1)(b) and (1)(c) each have a different colour, and the nutritional compositions (2)(a), (2)(b) and (2)(c) have the same colour as the nutritional compositions (1)(a), (1)(b) and (1)(c), respectively, and optionally the nutritional compositions (3)(a), (3)(b) and (3)(c) have the same colour as the nutritional compositions (1)(a), (1)(b) and (1)(c), respectively.

In one aspect, the food ingredient is of good quality, for example by being fresh, and has a stable taste/flavour over the course of the shelf life of the weaning composition. Suitably, the source of the raw material for the ingredient should be sourced to provide a good quality ingredient, for instance by selecting an ingredient that is an appropriate variety, an ingredient collected at a good time of harvest, and/or an ingredient that is conditioned appropriately (*e.g*., fresh, frozen directly after collection, etc.).

In one aspect, the nutritional composition can be provided or prepared using processing techniques that provide an ingredient comprising the taste/flavour and colour of the ingredient similar to the taste/flavour and colour of the ingredient freshly cooked for a family meal. For instance, the thermal treatment of the ingredient could be selected to achieve the taste/flavour of a cooked vegetable but should not be so much as to lead to deterioration of the colour and taste/flavour of the ingredient, and to the development of cooked notes in the ingredient.

In one aspect, the texture of the composition (and the food ingredient comprised therein) is increased through the weaning stages. That is, it is preferred that both the relative amount and the mean size of the pieces or chunks of the food ingredient in recognizable form are increased going from stage I to stage II, from stage II to stage III, and from stage III to stage IV. It is preferred that the stage I weaning composition is in puree form (without chunks, preferably a homogeneous mixture, and preferably comprising no individual pieces of a size of 3 mm or larger), and stage II weaning composition is in mashed or chopped form. In mash form, there are individual chunks or pieces of the food ingredient noticeable to the eye. Again, a representative sample of adults can be used for establishing recognizabiility through texture. It is preferred that between 30 - 55 wt%, preferably 35 - 55 wt% of the food ingredient in the stage II weaning composition is provided in the form of pieces with a size of 3 - 8 mm. In one embodiment, stage III weaning composition comprises 55 - 75 wt%, more preferably 60 - 70 wt% of the food ingredient in the form of pieces with a size between 10 - 15 mm. The optional stage IV weaning composition preferably comprises 75 - 95 wt%, more preferably 80 - 90 wt% of the food ingredient in the form of pieces with a size larger than 15 mm.

Additionally or alternatively, the food ingredient is a major ingredient in the nutritional composition comprising the ingredient. It is preferred that the food ingredient is present in amounts of at least 15 %, more preferably at least 20 % of the total weight of the composition. For stage I weaning compositions, it is preferred that the food ingredient is present in amount of at least 35 wt% of the composition, preferably at least 40 wt% of the composition, most preferably at least 50 wt% of the composition. In one embodiment, if the stage I weaning composition comprises a food ingredient in recognizable form selected from the group of vegetable material, it is preferred that - in addition to the first food ingredient in recognizable form as defined here above - there is no second food ingredient selected from the group consisting of meat, fish, poultry, egg, cheese or material derived from vegetable or fruit plant selected from the aforementioned lists present in each of nutritional compositions (1)(a), (1)(b) and (1)(c). In one embodiment, in the subsequent weaning stage II (and optionally stage III and IV) compositions, it is preferred that the food ingredient in recognizable form is present in amounts which correspond to at least 2 times, more preferably at least 3 times the amounts of any further food ingredient selected from the group consisting of vegetable or fruit material from the aforementioned lists, meat, fish, poultry, egg and cheese in the composition.

It is preferred that the number of food ingredients (including the food ingredient in recognizable form) selected from the group consisting of vegetable or fruit material from the aforementioned lists, meat, fish, poultry, egg and cheese in the weaning stage II (and optionally stage III, and more preferably also in stage IV) compositions is 2, 3 or 4, preferably 2 or 3. In one embodiment, stage II weaning compositions comprise 2 food ingredients in recognizable form selected from the group consisting of vegetable material from the aforementioned (preferred) list and one further food ingredient selected from the group consisting of vegetable material from the aforementioned (preferred) list, meat, poultry and fish. It is preferred that stage III (and stage IV) weaning compositions comprise 2 additional food ingredients selected from the group consisting of vegetable material from the aforementioned (preferred) list. Preferably at least one of the food ingredients in the stage II, stage III (and stage IV) weaning compositions is a starch-providing food ingredient, preferably selected from the group consisting of potato, pasta, rice.

It is preferred there is no cheese and/or egg present in stage I, stage II and stage III compositions. In one embodiment, there is preferably no egg present in stage I, stage II and stage III weaning compositions. To improve the imprinting effects and recognizability, minor amounts of additives, juices, purees and other components are usually not interfering with the recognizability of the food ingredient. It is however preferred that the stage I, stage II and stage III compositions do not contain any herbs.

By following at least one of the principles outlined above, the present invention provides a way to optimise food acceptance and learning and/or developing oral motor and sensory skills in infants and toddlers, preferably up to 18 months, more preferably up to 12 months of age. Throughout the weaning period, the complexity (*e.g*., number of ingredients) and/or the texture of the nutritional compositions suitably increases with the age of the infant intended to receive the composition (i.e. from stage I to II, II to III, and III to IV). Although the complexity and/or texture of the ingredient may differ between the nutritional compositions intended for different weaning stages, in all these embodiments the ingredient in each nutritional composition is provided in a recognizable form (preferably at least in terms of taste, flavour and smell, more preferably also in colour/appearance). Accordingly, by giving the infant the ingredient in a recognizable form repeatedly throughout multiple stages (*e.g.,* the stages of nutritional compositions a), b), and c), the infant learns and accepts the ingredient.

The compositions the present invention are suitably designed to contain all nutrients needed for an infant in each of the stages of its development, represented by the age for which each nutritional composition is intended.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

Each of the applications and patents mentioned in this document, and each document cited or referenced in each of the above applications and patents, including during the prosecution of each of the applications and patents ("application cited documents") and any manufacturer's instructions or catalogues for any products cited or mentioned in each of the applications and patents and in any of the application cited documents, are hereby incorporated herein by reference. Furthermore, all documents cited in this text, and all documents cited or referenced in documents cited in this text, and any manufacturer's instructions or catalogues for any products cited or mentioned in this text, are hereby incorporated herein by reference.

Various modifications and variations of the described methods and system of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in food technology, food sensory or related fields are intended to be within the scope of the claims.

### Examples

### Example 1 - Recognizability test with participants

An important element of the present invention is the recognizability of the ingredients in nutritional compositions intended for different developmental stages of the infant. In order to determine some suitable recipes and processing techniques, the recognizability of the vegetables in a number of nutritional compositions was assessed. The assessment was based on recognizability by adults (there are no methods provided in the literature to measure recognizability in infants). Thus this method was based on the hypothesis that if an ingredient in a nutritional composition can easily be recognized by an adult, repeated exposure of the recognizable ingredient to an infant will lead to the ability of the infant to learn and accept the ingredient.

To that end, a number of nutritional compositions containing a vegetable ingredient for infants were prepared or selected, and tested for expectation and recognizability. An overview of the different weaning compositions tested is given in Table 1, where 'vegetable content' indicates the total amount of the food ingredient (e.g. carrot, cauliflower, spinach) aimed to be recognizable in the test; a further vegetable is not incorporated in this amount. The compositions containing a selected food ingredient were evaluated warm (the consumption temperature was about 40 °C) and the products were offered semi-monadically (sequentially) in randomised order. A separate session was used for each ingredient.The results reported here are the sum of experiences of 61 participants who were not involved in the development of baby foods or the assessment of such foods. These participants were informed about the product type (*e.g.,* carrot puree for infants from 4 months and older). These 61 participants were divided over three panels. It was found that the results for each of the three subpanels were in accordance with the results collectively reported here.

The inclusion criteria required the participants to be familiar with the ingredient, and thus each participant was asked the following question: How familiar are you with the ingredient (*e.g*., the vegetable carrot?). Their answer could be selected from: unfamiliar, slightly familiar, familiar, very familiar. If the participant was unfamiliar or only slightly familiar with the vegetable, then they were excluded from the study. This resulted in the following numbers of assessors: 57 for carrot, 54 for spinach and 49 for cauliflower.

The participants were then given the following instructions and questions:
"*You are now given a nutritional product (e.g., carrot puree for infants from 4 months and older) to evaluate. Before you taste the product, please indicate to what extent you agree with the following statements:*
   *1) The appearance of this product is what I expect for a (e.g.) carrot puree.*
   *2) I find it easy to recognize that this is (e.g.) a carrot containing product based on its smell.*
*Now taste the product. Please indicate to what extent you agree with the following statements:*
   *3) I find it easy to recognize that this is (e.g.) a carrot containing product based on its taste.*
   *4) Overall, I find it easy to recognize that this is (e.g.) a carrot containing product."*

The scale for questions 1) to 4) was as follows: "*1*. *I strongly disagree; 2. I largely disagree; 3. I disagree somewhat; 4. I neither agree nor disagree; 5. I agree somewhat; 6. I largely agree; 7. I fully agree."*

### Results

The results were collected and are summarized in Table 1. An overall recognizability score of 5 was considered acceptable (4 is the neutral point in the scale, representing neither agree or disagree with the recognizability statement).

**Table 1. Results of the expectation and recognizability measurements**

| | | mean score all assessor (score 1-7) | | | | |
|---|---|---|---|---|---|---|
| Product description | Stage | appearance as expected* | mean score recognizability | | | vegetable Content** |
| | | | smell | taste | overall | |
| **Cauliflower** | | | | | | |
| Cauliflower puree | 1 | 3.67 | 5.33 | 5.08 | 4.92 | 80% |
| Creamy cauliflower, cheese | 2 | 4.76 | 4.51 | 5.27 | 5.18 | 36% |
| | | | | | | |

| **Spinach** | | | | | | |
|---|---|---|---|---|---|---|
| spinach puree | 1 | 5.22 | 5.50 | 5.56 | 5.50 | 40% |
| spinach, potatoes, chicken | 2 | 5.15 | 4.57 | 4.43 | 4.69 | 16% |
| spinach, potatoes, chicken | 3 | 5.56 | 4.54 | 4.87 | 5.11 | 15% |
| | | | | | | |

| **Carrot** | | | | | | |
|---|---|---|---|---|---|---|
| Carrot puree | 1 | 5.84 | 5.25 | 5.16 | 5.39 | 78% |
| Carrot, chicken | 2 | 5.61 | 5.07 | 5.40 | 5.65 | 37% |
| Carrot in Succulent pork casserole | 3 | 6.11 | 4.74 | 5.09 | 5.63 | 51% |
| Carrot, veal | 4 | 5.14 | 4.12 | 4.95 | 5,09 | 36% |

| | | | | | | |
|---|---|---|---|---|---|---|
| *This means to what extent the subjects agreed with the statement that the appearance is what one would expect for the type of vegetable; **Vegetable content (in terms of total weight of the composition) reflects the amount of the single food ingredient to be recognized (i.e. cauliflower, spinach and carrot, respectively) only. Other vegetables are not accounted for. | | | | | | |

The results in Table 1 thus show that it was possible to achieve good recognizability when the food ingredient was present in a predominant amount and the number of other ingredients was limited. Since these conclusions were drawn also by each subpanel independently, the test was regarded an objective manner to establish recognizability.

### Example 2

An easy to prepare vegetable containing meals range (with about seven vegetables, a different vegetable for each day of the week), with as products for stage 1 infants (infants who start weaning), single vegetable puree recipes (product comprising more than 50% of one vegetable) with no other components that prevent recognizability of the vegetable (no cheese, eggs, meat, poultry, fish) in the final product; with as products for stage 2 infants (generally infants of about 6 months until about 8 months) the same vegetables but in combination with a starch source (potato, pasta, rice, etc.) and/or protein source (meat, fish, poultry, egg, etc.); with as products for stage 3 (generally infants of about 8 months until about 12 months) the same vegetables in combination with a starch source (potato, pasta, rice, etc.) and/or protein source (meat, fish, egg, etc.) but with more texture and pieces suitable for consumption by children between 8-12 months.

### Example 3

As example 2, with as vegetables: carrots, sweet potato, green beans, green peas, broccoli, sweet corn and cauliflower.

### Example 4

An easy to prepare vegetable containing meals range (with about seven vegetables, a different vegetable for each day of the week), with as products for stage 1, single vegetable puree recipes (>50% of the vegetable) with no other components that prevent easy recognition of the vegetable in the final product; with as products for stage 2 the same vegetables but with mashed texture instead of puree; with as products for stage 3 the same vegetables but with mashed texture plus pieces instead of a smooth pureed or mashed texture without pieces.

### Example 5

As example 4 but with single vegetables and vegetable mixtures; with the vegetables and vegetable mixtures being repeated for at least 50% of the recipes across the stages; the vegetable mixtures being culturally appropriate mixtures.

### Example 6

An easy to prepare frozen vegetable range consisting of small portions of pureed single vegetables for stage 1 babies (e.g. carrot, broccoli, parsnip, peas and butternut squash), and the same mashed vegetables as single vegetable portions or as predominant component of a baby meal for stage 2 babies.

### References

Cashdan, E. (1994). A sensitive period for learning about food. Human Nature, 5, 279-291.
Cooke, L., Carnell, S., & Wardle, J. (2006). Food neophobia and mealtime food consumption in 4-5 year old children. International Journal of Behavioral Nutrition and Physical Activity, 3, 14.
Falciglia, G. A., Couch, S. C., Gribble, L. S., Pabst, S. M & Frank, R. (2000). Food Neophobia in Childhood effects Dietary Variety. Journal of the American Dietetic Association, 100 (12), 1474-1481.
Madruga, S.W., Araúja, C.L.P., Bertoldi, A.D., Neutzling, M.B. (2012). Tracking of dietary patterns from childhood to adolescence. Rev SÚDE Publica, 46(2), 1-10.
Nicklas, T. A., Webber, L. S., & Berenson, G. S. (1991). Studies of consistency of dietary intake during the first four years of life in a prospective analysis: Bogalusa Heart Study. Journal of American College of Nutrition, 10, 234-241.
Nicklaus, S., Boggio, V., Chabanet, C., & Issanchou, S. (2004). A prospective study of food preferences in childhood. Food Quality and Preference, 15, 805-818.
Pliner, P. (2008). Cognitive schemas: how can we use them to improve children's acceptance of diverse and unfamiliar foods? British Journal of Nutrition, 99, Suppl. 1, S2-S6.
Russell, C. G., & Worsley, A. (2008). A Population-based Study of Preschoolers' Food Neophobia and Its Associations with Food Preferences. Journal of Nutrition Education and Behavior, 40 (1), 11-19.
Skinner, J. D., Carruth, B. R., Bounds, W., Ziegler, P., & Reidy, K. (2002). Do food-related experiences in the first 2 years of life predict dietary variety in school-aged children? Journal of Nutrition Education and Behavior, 34, 310-315.

## Claims

1. A product presentation or product range comprising at least 6 nutritional compositions, suitable for weaning infants, said product presentation or range comprising:
- nutritional compositions (1)(a), (1)(b) and (1)(c) intended for weaning infants at the start of weaning (up to about 2 months after the start of weaning), such period referred to as 'stage I weaning period', wherein said compositions comprise a food ingredient (a), (b) and (c), respectively,
- nutritional compositions (2)(a), (2)(b) and (2)(c) intended for weaning infants subsequent to the initial two-month or stage I weaning period, such period referred to as the 'stage II weaning period', wherein said compositions comprise said food ingredient (a), (b) and (c), respectively, and optionally:
- nutritional compositions (3)(a), (3)(b) and (3)(c) intended for weaning infants subsequent to the stage II weaning period, such period referred to as the 'stage III weaning period', wherein said compositions comprise said food ingredient (a), (b) and (c), respectively,
wherein said food ingredients (a), (b) and (c) are derived from a single vegetable plant and are present in each of the corresponding stage I and II (and optionally stage III) nutritional compositions, and said food ingredients (a), (b) and (c) are present in a recognizable form, preferably recognizable such that a representative sample of adult consumers who are familiar with said food ingredients (a), (b) and (c) recognize the food ingredient as originating from the vegetable plant based on the combination of colour, smell and taste and flavour.

2. The product presentation or product range according to claim 1, being an article display tray or store shelf comprising said nutritional compositions.

3. The product presentation or product range according to claim 1 or 2, wherein said food ingredient is derived from a single vegetable plant selected from the group consisting of pea, corn, cabbage, courgette, carrot, spinach, endive, leek, red beet, brown bean, butter bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom.

4. The product presentation or product range according to claim 3, wherein said food ingredient is derived from a single vegetable plant selected from the group consisting of cabbage, spinach, endive, leek, red beet, green bean, broccoli, sprout, chicory, bamboo, asparagus, artichoke, turnip, celery, parsnip, cucumber, lettuce, rhubarb, pepper and mushroom.

5. The product presentation or product range according to any one the preceding claims, wherein said nutritional compositions are provided with means for identifying and/or associating the nutritional compositions comprising the same food ingredient in recognizable form through all weaning stages.

6. The product presentation or product range according to claim 5, wherein the identification or association is achieved by providing the containers comprising said nutritional compositions with indicia (e.g. words, symbols, colors, logo and/or number).

7. The product presentation or product range according to any one of the preceding claims, wherein recognizability is assessed in a study with untrained assessors who are familiar with the vegetable, assessing the nutritional composition in terms of expected appearance recognisability of the smell and taste sensations and overall recognizability on a score of 1 - 5, 5 being the highest, and wherein a food ingredient is present in recognizable form if the overall score is higher than 3, preferably higher than 4.

8. The product presentation or product range according to any one of the preceding claims, wherein the nutritional compositions (1)(a), (1)(b) and (1)(c) are in puree form, and the nutritional compositions (2)(a), (2)(b) and (2)(c) are in mashed form.

9. The product presentation or product range according to claim 8, wherein the nutritional compositions (1)(a), (1)(b) and (1)(c) are homogeneous mixtures, and 30 - 55 wt% of the food ingredient present in the nutritional compositions (2)(a), (2)(b) and (2)(c) is in the form of pieces with a size of 3 - 8 mm; optionally, 55 - 75 wt% of the food ingredient present in the nutritional compositions (3)(a), (3)(b) and (3)(c) is in the form of pieces with a size between 10 - 15 mm.

10. The product presentation or product range according to any one of the preceding claims, wherein the nutritional compositions (1)(a), (1)(b) and (1)(c) each have a different colour, and the nutritional compositions (2)(a), (2)(b) and (2)(c) have the same colour as the nutritional compositions (1)(a), (1)(b) and (1)(c), respectively, and optionally the nutritional compositions (3)(a), (3)(b) and (3)(c) have the same colour as the nutritional compositions (1)(a), (1)(b) and (1)(c), respectively.

11. The product presentation or product range according to any one of the preceding claims, wherein said food ingredients (a), (b) and (c) are present in amounts of at least 15 %, more preferably at least 20 % of the weight of the nutritional compositions.

12. The product presentation or product range according to claim 11, wherein the food ingredient in each of nutritional compositions (1)(a), (1)(b) and (1)(c) is present in amount of at least 35 wt% of the composition, preferably at least 40 wt% of the composition, most preferably at least 50 wt% of the composition.

13. The product presentation or product range according to claim 11 or 12, wherein there is no second food ingredient selected from the group consisting of meat, fish, poultry, egg, cheese or material derived from vegetable or fruit plant selected from the group consisting of pea, corn, cabbage, courgette, carrot, spinach, endive, leek, red beet, butter bean, brown bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom; strawberry, banana, blueberry, apricot, pineapple, apple, orange, tangerine, mandarin, cherry, peach, grapefruit, melon, plum, pear, ros-hip, kiwi, red berry, grape, lemon, papaya, raspberry, avocado, cranberry, lychee, lime and nectarine present in each of nutritional compositions (1)(a), (1)(b) and (1)(c).

14. The product presentation or product range according to any one the preceding claims, wherein the number of food ingredients (including the food ingredient in recognizable form) selected from the group consisting of meat, fish, poultry, egg, cheese, and material derived from vegetable or fruit plant selected from the group consisting of pea, corn, cabbage, courgette, carrot, spinach, endive, leek, red beet, butter bean, brown bean, green bean, tomato, broccoli, cauliflower, corn, sprout, chicory, bamboo, egg plant, asparagus, artichoke, turnip, celery, parsnip, cucumber, sweet potato, lettuce, rhubarb, onion, pumpkin red, pepper and mushroom; strawberry, banana, blueberry, apricot, pineapple, apple, orange, tangerine, mandarin, cherry, peach, grapefruit, melon, plum, pear, ros-hip, kiwi, red berry, grape, lemon, papaya, raspberry, avocado, cranberry, lychee, lime and nectarine, in each of nutritional compositions (2)(a), (2)(b) and (2)(c) and optionally each of nutritional compositions (3)(a), (3)(b) and (3)(c) is 2, 3 or 4, preferably 2 or 3.

15. The product presentation or product range according to any one the preceding claims, for use in stimulating the food appreciation, food acceptance or food learning of the infant, for increasing familiarization with multiple tastes and flavours, and/or for reducing the risk of developing food neophobia, food refusal and/or other eating difficulties, and/or for reducing the occurrence of certain diseases related to unbalanced intake of food later in life and/or for developing oral motor and sensory skills in infants.

16. Use of food ingredients (a), (b) and (c) in the manufacture of a product range or presentation as defined in any of the preceding claims for providing nutrition to a weaning infant and/or improving healthy food learning and appreciation and/or for developing oral motor and sensory skills in infants, involving administering: said stage I nutritional compositions (1)(a), (1)(b) and (1)(c) to weaning infants for a two-month period from the start of weaning, the infant preferably between 4 and 6 months of age at the start of weaning; said stage II nutritional compositions (2)(a), (2)(b) and (2)(c) to weaning infants for a two-month period subsequent to the stage I weaning period; and optionally said stage III nutritional compositions (3)(a), (3)(b) and (3)(c) to weaning infants for a four-month period subsequent to the stage IV weaning period.

17. A method for providing nutrition to a weaning infant and/or improving healthy food learning and appreciation and/or for developing oral motor and sensory skills of a weaning infant, comprising feeding to the infant nutritional compositions (1)(a), (1)(b) and (1)(c) and (2)(a), (2)(b) and (2)(c) and optionally (3)(a), (3)(b) and (3)(c).
